# EUROPEAN PATENT SPECIFICATION

(11) **EP 1 602 026 B1**
(45) Date of publication and mention of the grant of the patent: **30.09.2009**
(21) Application number: 03768451.1
(22) Date of filing: 15.12.2003
(51) Int. Cl.: G06F 3/02, G09F 15/02

(54) **A POSTER WITH ELECTRONIC TOUCHPAD INPUT AREAS**
POSTER MIT ELEKTRONISCHEN TOUCHPAD-EINGABEBEREICHEN
AFFICHE COMPRENANT DES ZONES DE SAISIE PAR PANNEAUX DE CONTACT ELECTRONIQUES

(30) Priority: 28.02.2003 SE 0300542
(43) Date of publication of application: 07.12.2005
(73) Proprietor: SCA Packaging Sweden AB, 331 27 Värnamo (SE)
(72) Inventor: WÅGBERG, Pia, S-181 30 Lidingö (SE); UNANDER, Tomas, S-852 37 Sundsvall (SE); HÄGGLUND, Rickard, S-862 34 Kvissleby (SE); FROM, Anders, S-854 60 Sundsvall (SE)
(74) Representative: Ekström, Nils
(86) International application number: PCT/SE2003/001947
(87) International publication number: WO 2004/077286

(56) References cited:
- DE-A1- 19 611 756
- US-A1- 2002 149 572

## Description

### TECHNICAL FIELD

The invention relates to a poster comprising a sheet material forming a substrate and a printed layer containing an image being positioned on top of said substrate.

### BACKGROUND ART

Posters are frequently used for commercial and informative purposes. Posters carry a printed image, which can be designed to attract the attention of a potential customer. The image can carry information intended to communicate a message to the potential customer or intended to further attract the attention of the potential customer. In the modern society of today, messages from a plurality of posters are competing to attract the attention of a potential customer. It has shown that frequently persons being subjected to a flood of information from a plurality of posters are overwhelmed by the amount of information and do no pay much attention at all to the contents of the posters.

It has shown that use of interactive media further enhances the capability of attracting the attention of potential customers and the capability of providing information to the potential customer. By interactive media is intended any media which is capable to in some manner respond to an input from a user. Interactive media therefore requires the use of an input device, that is a device for sensing or otherwise recognising an intended input from a user. The input device will be used to control electronic equipment, which in some manner responds to the intended input.

Normally, in the event interactive media is used in connection with posters, the input device is made completely separate from the poster. Input devices in the form of a separate keyboard used for controlling electronic equipment or in the form of separate pushbuttons which are arranged in the vicinity of the poster or applied on the front surface of the poster are previously known.

The use of standard keyboards together with a poster reduces the ability for a user to intuitively understand what operations should be made. Lengthy instructions could be needed in order for ensure that the user makes a correct input.

DE19611756 describes a poster fabricated from paper, plastic or metal foil, comprising a visible side and a rear side, and including an electronic module, preferably arranged at the rear side; the poster has an aperture associated spatially with the module, through which the module is at least partially visible; the module is preferably activated by pressing.

US2002/0149572 discloses a thin, flexible capacitive touch sensor which may be affixed over e.g. a computer monitor, and a method of manufacturing capacitive touch sensors. A substrate is coated by depositing (e.g. sputtering) a thin, transparent, flexible layer of resistive material, forming an active area and connected via electrodes and leads to a controller providing a signal indicative of an X/Y position of touch. The electrodes and leads may be deposited by printing conductive ink. In the alternative embodiment of Fig. 7, the sensor also comprises graphics (e.g. representing buttons) printed with a non conductive ink; this sensor may be *applied to* an active, but also to a flexible, passive display, e.g. a poster.

### DISCLOSURE OF INVENTION

An object of the invention is to provide a poster, which has an integrated input device. When using such poster a user would be directed to make correct inputs by the information carried in the image of the poster, furthermore an adapted number of input areas can be arranged on the poster thereby reducing the amount of confusion for a user.

A second object of the invention is to provide a poster including an integrated input device, which can be manufactured by effective manufacturing methods.

Further objects of the invention are to provide a poster including an integrated input device, where the complexity of the circuitry arranged on the poster is low, and which does not include moveable parts.

These objects are achieved by a poster according to the characterising portion of claim 1. A poster according to the invention includes means for entering commands into an electronic circuit in the form of a pattern of conducting material forming one or a plurality of conducting input touchpad electrodes in the form of conductive input areas, each input area being connected to a connecting strip, said electrodes being arranged for capacitive coupling with an user. Such input electrodes can easily be applied to a substrate, which is intended to carry an image created in a printing process, by means of printing.

Additionally, the capacitive input electrodes used in a poster according to the invention has shown to be particularly advantageous since no movable switches are required. Furthermore, when using of capacitive input electrodes, is it neither necessary to arrange the electrodes such that the user can touch them, nor it is necessary to cover the electrodes with protective layers. The manufacturer has the freedom of choice to arrange the electrodes either behind the image on top of the substrate or on the opposite side of the substrate in relation to the image.

The input device used in the poster includes one or several input areas constituted by electrically conducting electrodes, to each of which one or several functions are connected. In particular, the invention relates to a poster including an input device of the type where the proximity of a grounded body, e.g. the finger of a user, results in a coupled capacitance between the grounded body and the electrode, whereby a detectable change of capacitance occurs and the intended input can be verified.

According to a particularly preferred embodiment the conducting pattern of the device including the input areas are printed on a paper substrate using a conducting ink.

In order to detect an intended input by a user, the input device should be connected to a sensor control circuit. An example of a sensor control circuit is the tauFish measurement circuit described in "An installation of interactive furniture", Omojola et al., IBM systems journal, Vol 39, Nos 3 & 4, 2000, The sensor control unit should be arranged in a separate casing and connectably arranged via input output gates to connecting strips connected to conductive input areas of the input device. Using this configuration it is possible to reuse the sensor control unit when changing the poster.

In order to facilitate the connection between the input areas and the sensor control unit, the connecting strips should preferably lead to an edge portion of the substrate. An edge portion can optionally be created at a central position of the substrate, by arranging an opening through the substrate at a convenient location.

In a particularly preferred embodiment, the substrate is formed of board, paperboard, cardboard or corrugated fibreboard being sufficiently rigid to be self supporting. This is normally achieved if the substrate has a bending stiffness exceeding 150 Nmm, preferably exceeding 400Nmm. T

The invention furthermore relates to an arrangement including a poster provided with an input device comprising capacitive input electrodes and a method for producing such a poster.

### BRIEF DESCRIPTION OF DPAWINGS

Embodiments of the invention will be described in detail, with references to the following drawings, where
- fig. 1: shows a top view of a substrate carrying an input device,
- fig.2: shows a schematic view of a sensor control unit,
- fig. 3: shows a flow scheme for a process for manufacturing a poster according to the invention, and
- fig. 4: shows a top view of a poster according to the invention.

### MODE(S) FOR CARRYING OUT THE INVENTION

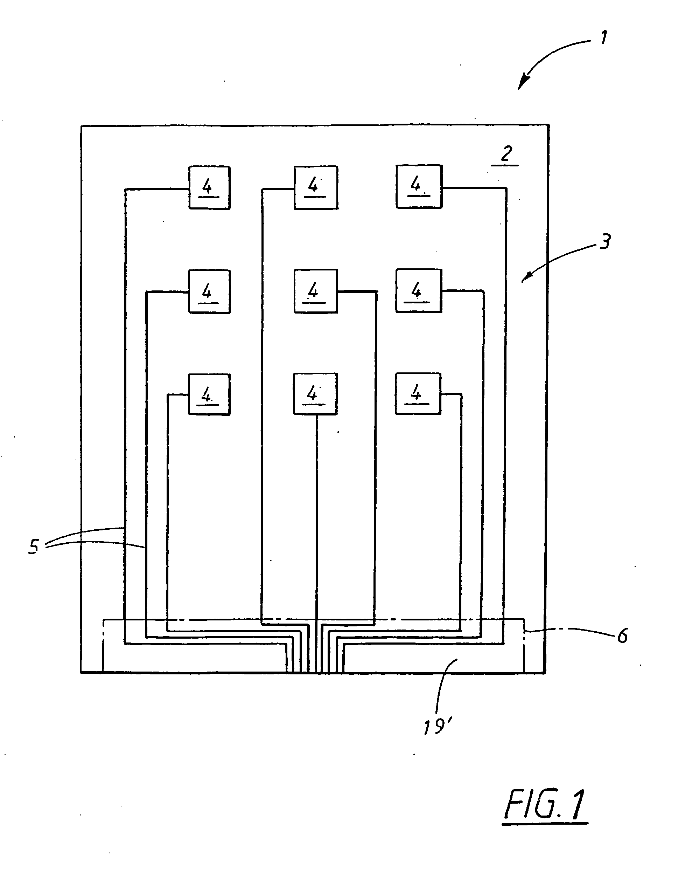

Figure 1 shows a substrate 2, which carries a layer of electrically conducting material applied in a pattern 3 on the paper substrate 2. The pattern 3 of electrically conducting material includes a set of separate input areas 4 and connecting strips 5 leading from the input areas 4.

The substrate can be manufactured by any material that is suitable to carry a printed image, for example a plastic material or a paper substrate. A poster according to the invention will include a printed image carried by the substrate 2. The printed image can be applied on either side of the substrate, that is on the side which carries the pattern of electrically conducting material or on the other side. In the case the pattern of electrically conducting material is situated on the opposite side of the substrate in relation to the image or if the image completely covers the input areas 4, the printed image should include markers indicating the position of the input areas 4.

The graphic design is applied to the substrate by use of a conventional printing process such as offset- or screen-printing in which the designs in printed directly on the substrate. The conducting pattern 3 can optionally be covered by an insulating material.

A paper substrate may be formed by any type of paper including ordinary paper, fine paper, fully bleached paper, board, paperboard, cardboard, corrugated fibreboard and fluted paper. However, it is particularly advantageous if the paper substrate has a bending stiffness exceeding 150 Nmm, preferably exceeding 400 Nmm. This can be achieved by paper substrates of board, paperboard, cardboard or corrugated fibreboard. In the event such rigid paper is used, the poster will be self-supporting.

The pattern 3 of conducting material is applied to the sheet material in a printing process. However, in a preferred embodiment the pattern 3 of conducting material is applied by use of any known printing technique including screen printing or offset printing, which are particularly advantageous. For a more detailed description of the preferred printing techniques it is referred to "Grafisk Tryckteknik" by L. Törnklev, Spektra 1987.

Printing of the pattern 3 of electrically conducting material can be performed by using conducting ink. Conducting inks typically includes a conductive pigment or other finely divided conductive material coloured or uncoloured, a binder and a liquid coating carrier. Optionally a plasticizer is included to provide desired flexibility. The conducing pigment is preferably carbon based, such as graphite or silver based.

### In stead of conducting inks, a printable conducting polymer can be used

The input areas 4 are preferably of a size, which is adapted for allowing convenient input for a user with normal sized fingers. Furthermore, the input areas are preferably distributed over the substrate so as to allow access to each input area 4 without touching a neighbouring input area. In an alternative embodiment, where it is intended that a user should touch one or several groups of input areas simultaneously, the size of the input areas 4 and/or the distance between the input areas 4 can be made smaller.

The connecting strips 5 are made as thin lines leading from each input area 4 to a gate portion 6 positioned on the paper substrate 2. The gate portion 6 includes a collection of the connecting strips 5 for easy access by input/output gates of a sensor control unit (not shown). Preferably all connecting strips are gathered in one common gate portion 6, alternatively, if the number of input areas 4 are great, that is exceeding 20, several gate portions 6 might be arranged on the paper substrate. The gate portion or portions 6 are preferably arranged at one or several of the end portions of the paper substrate. For this reason the connecting strips 5 lead to one or several of the ends of the paper substrate 2 or to a position in the immediate vicinity of one or several of the ends. In a preferred embodiment, the distance from the edge of the paper substrate to the connecting strips 5 at the gate portion 6 is less than 1.0 cm, preferably less than 2 mm. The connecting strips 5 are collected in one or several clusters forming the gate portions 6.

The connecting strips 5 are furthermore designed and positioned for reducing the risk of unintentional contact by a user. For this reason the connecting strips 5 are made thin, such that the capacitive coupling between a user and the connecting strip will be small. Furthermore the connecting strips 5 are positioned on the paper substrate 2 at locations where the risk for unintentional contact is low. In a preferred embodiment of the invention the connecting strips are covered by an insulating layer, which preferably is printed on top of the paper substrate 2.

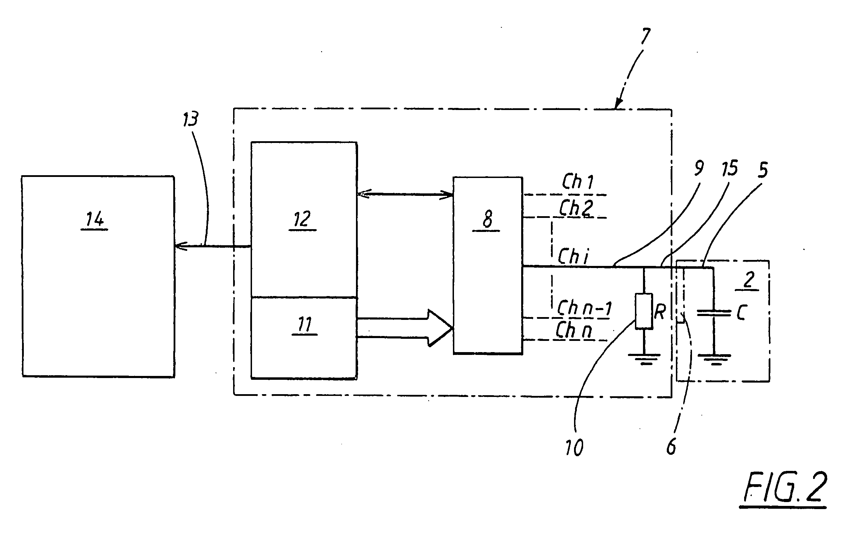

Figure 2 shows a schematic view of a sensor control unit 7 according to one embodiment of the invention. The sensor control unit includes a set of input/output gates 15 connected to a multiplexing unit 8. The input/output gates 15 are connected to the connecting strips 5 at the gate portion or portions 6 of the substrate 2. The multiplexing unit 8 is arranged for applying a predetermined low voltage to each of the connecting strips 5 and thereby charge the input areas 4. The input areas 4 are provided with a predetermined capacitance. When a person approach or touch the input area, the capacitance is increased due to the capacitive coupling with the human body.

The multiplexing unit 8 has a set of output channels 9 being connected to each connecting strip, each output channel having a resistor 10 connected to ground in parallel to said input/output gates.

The sensor control unit 7 further includes a voltage supply 11 and a means 12 for measuring a voltage drop over said resistors 10, wherein said multiplexing unit 8 is arranged for connecting said voltage to each of said input areas and thereby charging each input area to a predetermined potential and that said means 12 for measuring the voltage drop thereafter senses the voltage drop ratio.

The sensor control unit 7 includes a microcontroller 12, which is arranged for indicating that a specific input area is indicated by a user if the voltage drop ration is below a predetermined limit and that a specific input area is not indicated by a user if the voltage drop ration is above a predetermined limit.

The sensor control unit further includes output channels for control of an external device 14, for instance a computer, a synthesiser, or any other electronic apparatus.

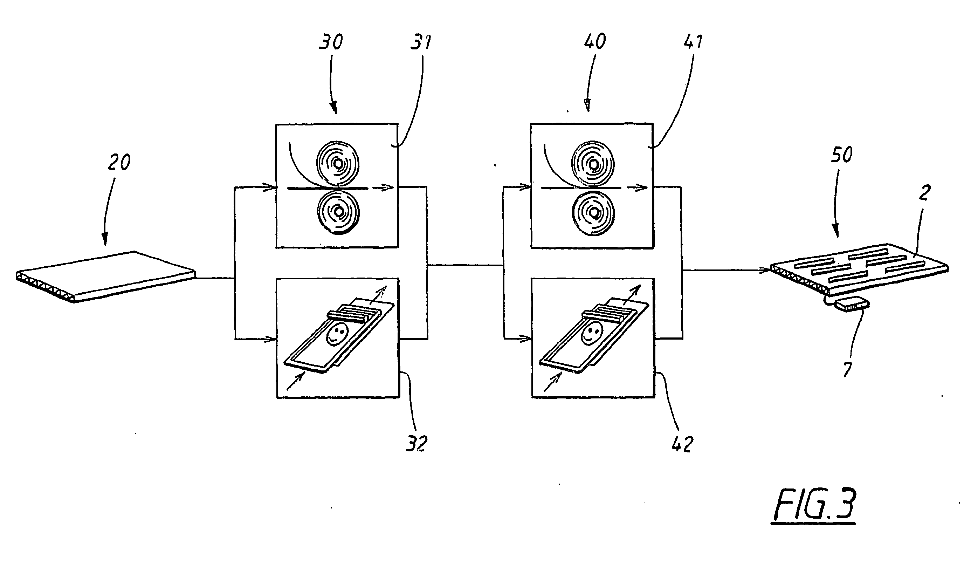

Figure 3 shows a flow scheme for a method for producing a poster according to the invention.

In a first method step 20 a paper substrate is provided. In a second method step 30 a pattern of a electrically conducting material is applied on the paper substrate.

The second method step is composed of a printing process 32, preferably by screen- or offset printing, where the conducting pattern is printed on top of said paper substrate using a conducting ink.

According to the invention a graphic design is applied on top of said paper substrate, preferably covering the whole or at least a part of the pattern of conducting material. This is performed in a third method step 40.

The third method step is composed of a printing process 42, preferably by screen- or offset printing, where the graphic design is printed on top of said paper substrate, preferably covering the whole or at least part of the pattern of conducting material.

In a fourth method step 50, the input device on the poster is connected to a sensor control unit 7. The sensor control unit is separate from the poster and is encapsulated in a casing. The sensor control unit 7 is connected to the input areas carried by the poster via connecting strips arranged on the poster. The connecting strips preferably lead to a position in the vicinity of an edge portion of the substrate. The sensor control unit is connected to the connecting strips.

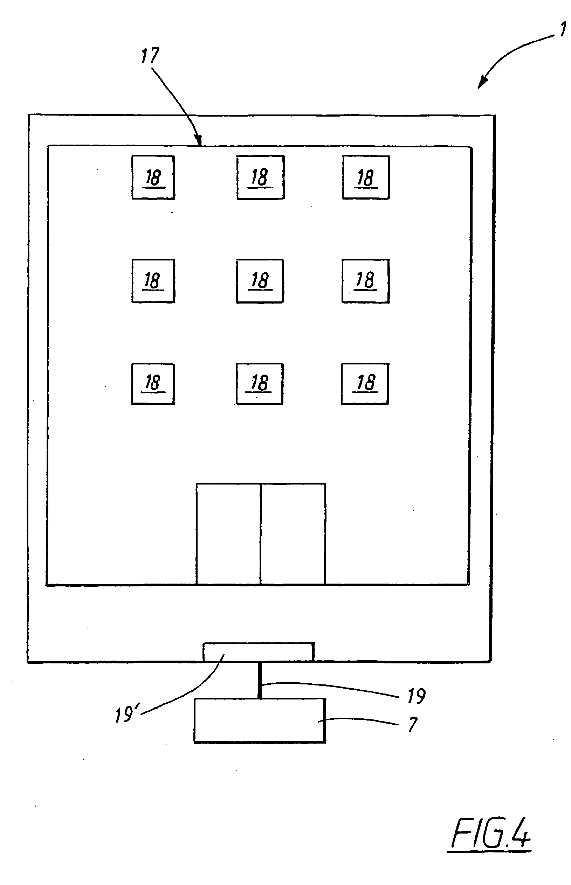

In figure 4 a top view of a poster 1 according to the invention is shown. The poster carries a printed layer 13, which carries a design 17. In the shown embodiment the design is in the shape of a house having windows that are located at the input areas. The printed layer includes markers 18, which indicate the position of the input areas 4. The markers could be formed by holes in the printed layer 13 at the location of the input areas, a transparent portion of the printed layer 13 at the location of the input areas or a printed sign or mark at the location of the input areas, which printed signs or mark differ from the remaining part of the printed layer such that a user would notice the position of the input areas. Furthermore a sensor control unit 7 enclosed in a casing is connected via input/output gates to the connecting strips 5. The sensor control unit 7 is releasably connected to the connecting strips via a cable 19 connected to a clamp terminal 19'.

The scope of the invention should not be restricted to the embodiments described above, but can be varied within the scope of the appended claims.

## Claims

1. A poster comprising a sheet material forming a substrate (2), a printed layer containing an image being positioned on top of said substrate (2) and means for entering commands into an electronic circuit, **characterised in that** said means for entering commands into an electronic circuit includes a pattern (3) of conducting material printed on said substrate (2), said pattern (3) of conducting material forming one or a plurality of conducting input touchpad electrodes in the form of conductive input areas (4) and connecting strips (5), where each input area (4) is connected to a connecting strip (5), said touchpad electrodes being arranged for capacitive coupling with an user, that the conducting pattern (3) is printed on top of said substrate (2), and that the printed layer containing an image is printed on top of said substrate (2), preferably covering the whole or at least part of the pattern (3) of conducting material.

2. A poster according to claim 1, **characterized in that** said sheet material is a paper substrate.

3. A poster according to claim 2, **characterized in that** the paper substrate has a bending stiffness exceeding 150 Nmm, preferably exceeding 400 Nmm.

4. A poster according to claim 1, **characterized in that** said sheet material is a plastic material.

5. A poster according to claim 1 - 4, **characterized in that** said pattern (3) of conducting material is formed of a conducting ink.

6. A poster according to claim 1 - 4, **characterized in that** said pattern (3) of conducting material is formed of a conducting plastic material.

7. A poster according to any of the preceding claims,
**characterized in that** said printed layer containing an image covers said conducting material.

8. A poster according to claim 7, **characterized in that** said printed layer containing an image is printed directly on top of said substrate.

9. An arrangement comprising a poster according to any of the preceding claims and a sensor control unit (7) enclosed in a casing and connectable via input/output gates (15) to said connecting strips (5) on said substrate (2), said sensor control unit (7) being arranged for identifying a users indication of a specific input area.

10. An arrangement according to claim 9,
**characterized in that** said sensor control unit (7)
includes a multiplexing unit (8) having a set of input/output channels (9) being connected to each connecting strip (5), each input/output channel (9) having a resistor (10) connected to ground in parallel to said input/output gates (15).

11. An arrangement according to claim 10,
**characterized in that** said sensor control unit (7) further includes a voltage supply (11) and a means (12) for measuring a voltage drop over said resistors, wherein said multiplexing unit (8) is arranged for connecting said voltage supply (11) to each of said input areas (4) and thereby charging each input area (4) to a predetermined potential and that said means (12) or measuring the voltage drop thereafter senses the voltage drop ratio.

12. An arrangement according to claim 11,
**characterized in that** said means (12) for measuring a voltage drop includes a microcontroller, which is arranged for indicating that a specific input area (4) is indicated by a user if the voltage drop ratio is below a predetermined limit and that a specific input area (4) is not indicated by a user if the voltage drop ration is above a predetermined limit.

13. Method of producing a poster according to any of the preceding claims, wherein the following method steps are included:
- providing (20) a substrate,
- providing a conducting pattern including a set of input areas,
- printing (30) the conducting pattern to the substrate to form means for entering commands, and
- applying a printed layer containing an image on top of said substrate (2)
**characterised in that** the method step of printing (30) the conducting pattern is performed by printing the conducting pattern on top of said substrate, and the method step of applying a printed layer containing an image is performed by printing an image on top of said substrate, said image preferably covering the whole or at least part of the pattern of conducting material.

14. Method according to claim 13, **characterized in that** the conducting pattern is applied by a printing technique using a conducting ink.

15. Method according to any of claims 13-14,
**characterized in that** the printed layer containing an image is applied by a printing technique.

## Patentansprüche

1. Poster umfassend ein Blattmaterial, das ein Substrat (2) bildet, wobei eine gedruckte Schicht, die ein Bild enthält, auf dem Substrat (2) angeordnet ist, und ein Mittel zum Eingeben von Befehlen in eine elektronische Schaltung, **dadurch gekennzeichnet, dass** das Mittel zum Eingeben von Befehlen in eine elektronische Schaltung ein auf das Substrat (2) gedrucktes Muster (3) aus leitfähigem Material beinhaltet, wobei das Muster (3) aus leitfähigem Material eine oder mehrere leitfähige Eingabetastfeldelektroden in der Form leitender Eingabebereiche (4) und Verbindungsstreifen (5) bildet, jeder Eingabebereich (4) mit einem Verbindungsstreifen (5) verbunden ist und die Tastfeldelektroden zur kapazitiven Kopplung mit einem Benutzer eingerichtet sind,
dass das leitfähige Muster (3) auf das Substrat (2) gedruckt ist und dass die gedruckte Schicht, die ein Bild enthält, auf das Substrat (2) gedruckt ist, wobei sie vorzugsweise das gesamte Muster (3) aus leitfähigem Material oder zumindest einen Teil dessen bedeckt.

2. Poster nach Anspruch 1, **dadurch gekennzeichnet, dass** das Blattmaterial ein Papiersubstrat ist.

3. Poster nach Anspruch 2, **dadurch gekennzeichnet, dass** das Papiersubstrat eine Biegesteifigkeit von mehr als 150 Nmm, vorzugsweise von mehr als 400 Nmm aufweist.

4. Poster nach Anspruch 1, **dadurch gekennzeichnet, dass** das Blattmaterial ein Kunststoffmaterial ist.

5. Poster nach Anspruch 1-4, **dadurch gekennzeichnet, dass** das Muster (3) aus leitfähigem Material aus einer leitfähigen Tinte gebildet ist.

6. Poster nach Anspruch 1-4, **dadurch gekennzeichnet, dass** das Muster (3) aus leitfähigem Material aus einem leitfähigen Kunststoffmaterial gebildet ist.

7. Poster nach einem der vorhergehenden Ansprüche, **dadurch gekennzeichnet, dass** die gedruckte Schicht, die ein Bild enthält, das leitfähige Material bedeckt.

8. Poster nach Anspruch 7, **dadurch gekennzeichnet, dass** die gedruckte Schicht, die ein Bild enthält, direkt auf das Substrat gedruckt ist.

9. Anordnung umfassend ein Poster nach einem der vorhergehenden Ansprüche und eine Sensorsteuereinheit (7), die in einem Gehäuse eingeschlossen und über Eingabe/Ausgabe-Gates (15) mit den Verbindungsstreifen (5) auf dem Substrat (2) verbindbar ist, wobei die Sensorsteuereinheit (7) zum Identifizieren einer Benutzerangabe eines spezifischen Eingabebereichs eingerichtet ist.

10. Anordnung nach Anspruch 9, **dadurch gekennzeichnet, dass** die Sensorsteuereinheit (7) eine Multiplexingeinheit (8) mit einem Satz von Eingabe/Ausgabe-Kanälen (9) beinhaltet, die mit jedem Verbindungsstreifen (5) verbunden sind, wobei jeder Eingabe/Ausgabe-Kanal (9) einen widerstand (10) aufweist, der parallel zu den Eingabe/Ausgabe-Gates (15) mit der Erde verbunden ist.

11. Anordnung nach Anspruch 10, **dadurch gekennzeichnet, dass** die Sensorsteuereinheit (7) ferner eine Spannungsversorgung (11) und ein Mittel (12) zum Messen eines Spannungsabfalls über den Widerständen beinhaltet, wobei die Multiplexingeinheit (8) zum Verbinden der Spannungsversorgung (11) mit jedem der Eingabebereiche (4) und **dadurch** Laden jedes Eingabebereichs (4) auf ein vorgegebenes Potenzial eingerichtet ist, und dass das Mittel (12) zum Messen des Spannungsabfalls danach das Spannungsabfallsverhältnis erkennt.

12. Anordnung nach Anspruch 11, **dadurch gekennzeichnet, dass** das Mittel (12) zum Messen eines Spannungsabfalls einen Mikrocontroller beinhaltet, der eingerichtet ist, anzuzeigen, dass ein spezifischer Eingabebereich (4) durch einen Benutzer angegeben ist, wenn das Spannungsabfallsverhältnis unter einem vorgegebenen Grenzwert liegt, und dass ein spezifischer Eingabebereich (4) nicht durch einen Benutzer angegeben ist, wenn das Spannungsabfallsverhältnis über einem vorgegebenen Grenzwert liegt.

13. Verfahren zum Herstellen eines Posters nach einem der vorhergehenden Ansprüche, bei dem die folgenden Verfahrensschritte beinhaltet sind:
- Bereitstellen (20) eines Substrats,
- Bereitstellen eines leitfähigen Musters, das einen Satz von Eingabebereichen beinhaltet,
- Drucken (30) des leitfähigen Musters auf das Substrat, um ein Mittel zum Eingeben von Befehlen auszubilden, und
- Aufbringen einer gedruckten Schicht, die ein Bild enthält, auf das Substrat (2)
**dadurch gekennzeichnet, dass** der Verfahrensschritt des Druckens (30) des leitfähigen Musters durch Drucken des leitfähigen Musters auf das Substrat und der Verfahrensschritt des Aufbringens einer gedruckten Schicht, die ein Bild enthält, durch Drucken eines Bildes auf das Substrat durchgeführt werden, wobei das Bild vorzugsweise das gesamte Muster aus leitfähigem Material oder zumindest einen Teil dessen bedeckt.

14. Verfahren nach Anspruch 13, **dadurch gekennzeichnet, dass** das leitfähige Muster durch eine Drucktechnik unter Verwendung einer leitfähigen Tinte aufgebracht wird.

15. Verfahren nach einem der Ansprüche 13-14, **dadurch gekennzeichnet, dass** die gedruckte Schicht, die ein Bild enthält, durch eine Drucktechnik aufgebracht wird.

## Revendications

1. Affiche comprenant un matériau en feuille formant un substrat (2), une couche imprimée contenant une image qui est positionnée sur le dessus dudit substrat (2) et un moyen pour entrer des ordres dans un circuit électronique, **caractérisée en ce que** ledit moyen pour entrer des ordres dans un circuit électronique comprend un réseau (3) de matériau conducteur imprimé sur ledit substrat (2), ledit réseau (3) de matériau conducteur formant une ou une pluralité d'électrodes conductrices de pavé tactile d'entrée sous la forme de zones d'entrée conductrices (4) et de bandes de connexion (5), où chaque zone d'entrée (4) est reliée à une bande de connexion (5), lesdites électrodes de pavé tactile étant disposées pour un couplage capacitif avec un utilisateur,
**en ce que** le réseau conducteur (3) est imprimé sur le dessus dudit substrat (2), et **en ce que** la couche imprimée contenant une image est imprimée sur le dessus dudit substrat (2), en recouvrant de préférence la totalité ou au moins une partie du réseau (3) de matériau conducteur.

2. Affiche selon la revendication 1, **caractérisée en ce que** ledit matériau en feuille est un substrat en papier.

3. Affiche selon la revendication 2, **caractérisée en ce que** le substrat en papier a une rigidité en flexion supérieure à 150 Nmm, de préférence supérieure à 400 Nmm.

4. Affiche selon la revendication 1, **caractérisée en ce que** ledit matériau en feuille est une matière plastique.

5. Affiche selon l'une des revendications 1 à 4, **caractérisée en ce que** ledit réseau (3) de matériau conducteur est formée d'une pâte conductrice.

6. Affiche selon l'une des revendications 1 à 4, **caractérisée en ce que** ledit réseau (3) de matériau conducteur est formée d'une matière plastique conductrice.

7. Affiche selon l'une quelconque des précédentes revendications, **caractérisée en ce que** ladite couche imprimée contenant une image recouvre ledit matériau conducteur.

8. Affiche selon la revendication 7, **caractérisée en ce que** ladite couche imprimée contenant une image est imprimée directement sur le dessus dudit substrat.

9. Dispositif comprenant une affiche selon l'une quelconque des précédentes revendications et une unité de commande de détection (7) enfermée dans un boîtier et pouvant être connectée par des portes d'entrée/sortie (15) auxdites bandes de connexion (5) sur ledit substrat (2), ladite unité de commande de détection (7) étant prévue pour identifier une indication par l'utilisateur d'une zone d'entrée spécifique.

10. Dispositif selon la revendication 9, **caractérisé en ce que** ladite unité de commande de détection (7) comprend une unité de multiplexage (8) ayant un ensemble de canaux d'entrée/sortie (9) qui sont connectés à chaque bande de connexion (5), chaque canal d'entrée/sortie (9) comprenant une résistance (10) mise à la masse en parallèle auxdites portes d'entrée/sortie (15).

11. Dispositif selon la revendication 10, **caractérisé en ce que** ladite unité de commande de détection (7) comprend en outre une alimentation en tension (11) et un moyen (12) pour mesurer une chute de tension dans lesdites résistances, dans lequel ladite unité de multiplexage (8) est prévue pour connecter ladite alimentation en tension (11) à chacune desdites zones d'entrée (4) et pour ainsi charger chaque zone d'entrée (4) à un potentiel prédéterminé et **en ce que** ledit moyen (12) pour mesurer la chute de tension détecte ensuite le rapport de chute de tension.

12. Dispositif selon la revendication 11, **caractérisé en ce que** ledit moyen (12) pour mesurer une chute de tension comprend un micro-dispositif de commande, qui est prévu pour indiquer qu'une zone d'entrée spécifique (4) est indiquée par un utilisateur si le rapport de chute de tension est inférieur à une limite prédéterminée et qu'une zone d'entrée spécifique (4) n'est pas indiquée par un utilisateur si le rapport de chute de tension est supérieur à une limite prédéterminée.

13. Procédé de fabrication d'une affiche selon l'une quelconque des précédentes revendications, dans lequel le procédé comprend les étapes suivantes consistant à :
prévoir (20) un substrat,
prévoir un réseau conducteur comportant un ensemble de zones d'entrée,
imprimer (30) le réseau conducteur sur le substrat pour former des moyens destinés à entrer des ordres, et
appliquer une couche imprimée contenant une image sur le dessus dudit substrat (2),
**caractérisé en ce que** l'étape consistant à imprimer (30) le réseau conducteur est effectuée en imprimant le réseau conducteur sur le dessus dudit substrat, et l'étape consistant à appliquer une couche imprimée contenant une image est effectuée en imprimant une image sur le dessus dudit substrat, ladite image recouvrant de préférence la totalité ou au moins une partie du réseau de matériau conducteur.

14. Procédé selon la revendication 13, **caractérisé en ce que** le réseau conducteur est appliqué par une technique d'impression qui utilise une pâte conductrice.

15. Procédé selon l'une des revendications 13 à 14, **caractérisé en ce que** la couche imprimée contenant une image est appliquée par une technique d'impression.
